# EUROPEAN PATENT SPECIFICATION

(11) **EP 2 410 218 B1**
(45) Date of publication and mention of the grant of the patent: **29.05.2013**
(21) Application number: 11425192.9
(22) Date of filing: 18.07.2011
(51) Int. Cl.: F16K 11/078

(54) **Improvements to the single-control mixing valves for hot and cold water**
Verbesserungen an Mischventilen für Heiß- und Kaltwasser mit Einzelsteuerung
Améliorations pour les mitigeurs à commande unique pour eau froide et eau chaude

(30) Priority: 19.07.2010 IT BS20100126
(43) Date of publication of application: 25.01.2012
(73) Proprietor: Galatron Plast S.p.A., 46043 Castiglione delle Stiviere (MN) (IT)
(72) Inventor: Tedoldi, Giancarlo, 46043 Castiglione delle Stiviere (MN) (IT)
(74) Representative: Sangiacomo, Ines

(56) References cited:
- EP-B1- 1 064 481
- WO-A1-95/14876
- DE-A1- 4 106 702
- DE-A1-102007 048 026
- DE-U1-202006 006 855
- US-A- 5 609 188

## Description

### Field of Application of the Invention

The present invention relates generally to the field of taps and fittings and refers in particular to mixer valves for use in taps for mixing two fluids at different temperatures, particularly hot and cold water.

### State of the Art

In the field herein considered the mixing of hot and cold water can be carried out by single-handle taps provided with single-control mixing valve, also known as mixer cartridge. Typically, for its use the mixer valve is inserted into a valve body to which two pipes for supplying separately hot water and cold water are connected and having a spout of water towards usage.

According to a known embodiment, a mixer valve comprises its own cartridge body or casing having two bottom inputs for a separate input of hot water and cold water coming from the respective pipes connected to the tap body and an output opening for cold, hot or mixed water towards the spout of the tap itself. Inside the body or casing, valve means are provided that, starting from a fully closed and sealed position of the valve, allow to adjust both the flow rate and the water temperature delivered from time to time, changing the opening /closure degree of the water inputs and thus the flow of incoming hot and cold water too, for their mixing at changing ratios.

The valve means of these mixer valves are mostly of overlapping plate type, made of ceramic or other material, including a fixed input plate and a movable control plate, the latter being subjected to movements in different directions, manually operated by means of a puller driven by a control lever.

In particular, the fixed plate has input slots for water coinciding with the bottom inputs of the body or casing and the movable control plate has at least one port being able to be positioned in no way, partly or fully at the openings of the fixed plate and communicating downstream with the output opening towards the tap spout.

Usually, a mixing valve is accommodated in a valve body in a precise, unique position with respect to the inputs of hot and cold water. For this purpose the cartridge casing is provided with a pair of pins designed for engagement in seats obtained on the bottom of the tap or faucet body.

In addition, the opening /closing of such a mixer valve is carried out with an oscillating movement of the control lever around an axis of oscillation in a plane parallel to the plane of the movable plate for a translating movement thereof on the fixed plate, whereas the adjustment of the mixing is carried out by rotating the lever around a vertical axis and corresponding rotations of the movable plate on the fixed plate. More precisely, in almost all cases, in one rest position the control lever is located in a centre position. Starting from this position and after the valve has been opened by an oscillation of the lever upwards: to a full rotation of the lever to the right corresponds a delivery of only cold water; to a full rotation of the lever to the left corresponds a delivery of only hot water; and to a movement of the lever between these two extreme positions corresponds a delivery of both cold and hot water mixed in different ratios depending on the position of the lever.

However, starting from the closed valve, especially when its control lever is in the rest centre position, the next opening step would cause a completely unintentional delivery of mixed water with consumption albeit partial, but disadvantageous, of hot water. Consequently, it would also activate a water heating system, such as a boiler, an instant boiler or a heat exchanger, in any case with an evident energy consumption.

In an attempt to compensate for this problem, the document EP 1 064 481 B1 has proposed a tap incorporating a mixer valve of the above referred type, but with the characteristic that the puller associated with the movable control plate is orientated and guided to form an angle different from 90° between the direction of movement of said plate and the axis of rotation of the control lever. This embodiment, however, entails a change in the component arrangement from the usual, at least a specific working of the puller to be coupled with the movable plate in accordance to the teachings of such a document.

It was also proposed to modify the placement and angular orientation of the mixer valve in a respective valve body which, however, involves a change in the arrangement of pins of the cartridge casing or a different working of the tap body at least regarding coupling seats with these pins and the arrangement of the input passages for hot and cold water.

DE 10 2007 048026 describes an energy-saving lever mixer having an housing, a water outlet, a mixer cartouche and a mixer lever, in which an adapter device is arranged outside or inside the single-lever mixer, which separates a line or a channel into two paths for flowing hot water. The paths are guided into two openings in a mixer cartridge. The two paths are positioned laterally around opening, which is connected with the line or the channel.

DE 20 2006 006855 U1 discloses a supply of water to a basin, bath or shower that is drawn from cold water and hot water brought together in a mixer, in which the ratio of hot to cold is regulated by a lever. At one extreme of the lever position the supply of hot water is blocked and the lever is in-line with or directed towards the water outlet.

DE 41 06 702 discloses a lever-grip for a sanitary-ware's water-mixer valve positioned so that the water-mixer valve is in the cold-water position when the handle is in the middle position. The adjustment of the hot-water mixer valve is enclosed by a container inside the lever-grip and which can be turned an angle of roughly 50 degrees to the handle's centre-line

WO 95/14876 discloses a sanitary water valve with parallel valve disks whose mutually contacting surfaces each have one bisecting line, one of the valve disks being fixed and non-rotating and provided with one cold-water and one hot-water inlet aperture on either side of the bisecting line. The other valve disk, which can move in relation to the fixed, non-rotating disk, is provided with a surface deflection channel or a water admission aperture; by sliding and/or turning of the moveable valve disk with the aid of a lever, the surface channel or water admission aperture can be made to overlap fully or partially with one or other of the water admission apertures or with both, or brought into a closed position. The surface channel or water admission aperture can be shifted from the closed position to overlap with the cold-water inlet aperture by sliding the moveable valve disk against the fixed valve disk by lifting the lever in an intermediate position.

US 5 609 188 discloses a sanitary mixer tap that contains a first fixed control disc having a first through aperture communicating with a cold water supply and a second through aperture communicating with a hot water supply and laterally inverted in relation to a central plane M-M. Above the first control disc there is a second control disc which can be moved linearly and rotated in relation to the fixed control disc in the prior art manner to alter the quantity and temperature of the mixed water flowing from the mixer tap. The recess in the movable control disc, which can be caused to overlap variably with the through apertures in the fixed control disc, has a shaped control edge so that, when the sanitary mixer tap is opened, in the centrally rotated position of the movable control disc, it first solely brings about an overlap with the through aperture in the fixed control disc connected to the cold water supply.

### Objects and Summary of the Invention

On the contrary, an object of the present invention is to create conditions to limit unnecessary delivery of hot water through a mixer valve and thus to achieve energy savings, but without requiring any changes in coupling between the mixer valve and a respective valve tap and without any change in the coupling between the movable plate and the corresponding puller as well.

Another object of the invention is to propose a mixer valve adapted to effectively limit the consumption of hot water and being able be used with any tap body in place or substitution of conventional mixer valves of the type having the characteristics reported above.

A further object of the present invention is to propose a mixer valve by which, starting from a closed position, a delivery of hot water is possible only with voluntary movements by the user, in the absence of which only cold water will be delivered. In other words, only voluntarily a user will be able to deliver hot or mixed water at the desired temperature. Such objects and resulting implicit advantages are achieved with a mixer valve for hot and cold water according to claim 1, wherein the movable control plate driven by the control lever through the puller, in the centre closed position, it is at the cold water input slot and intercepts only it.

### Brief Description of the Drawings

More details of the invention will be apparent, however, from the following the description made with reference to the attached drawings, for illustration only and not limiting, wherein:

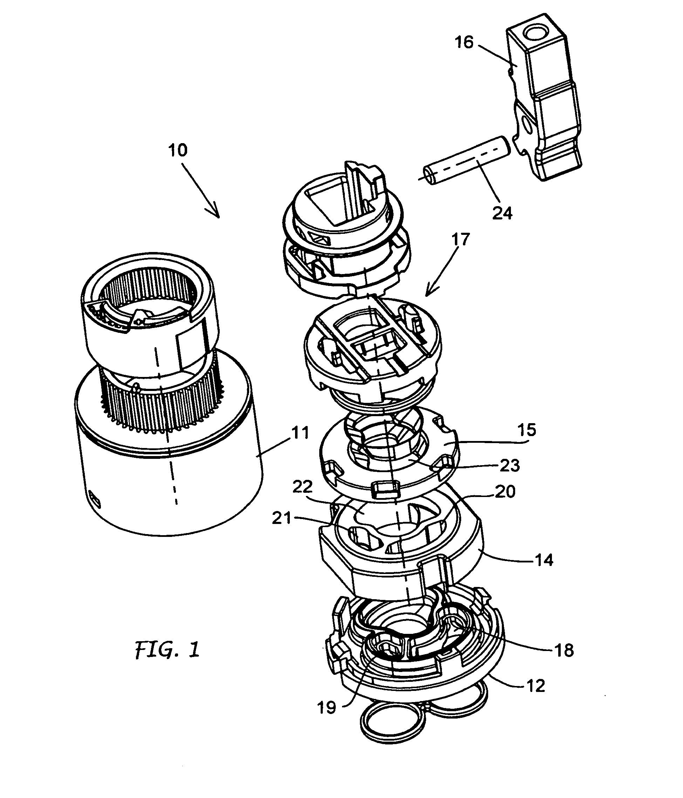

Fig. 1 is an exploded view of the components of the mixer valve according to the invention;

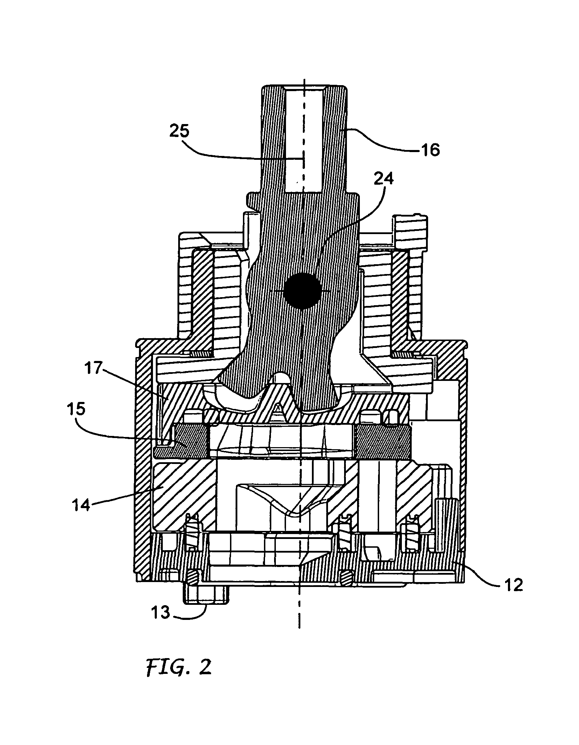

Fig. 2 is a section view of mixer valve when assembled;

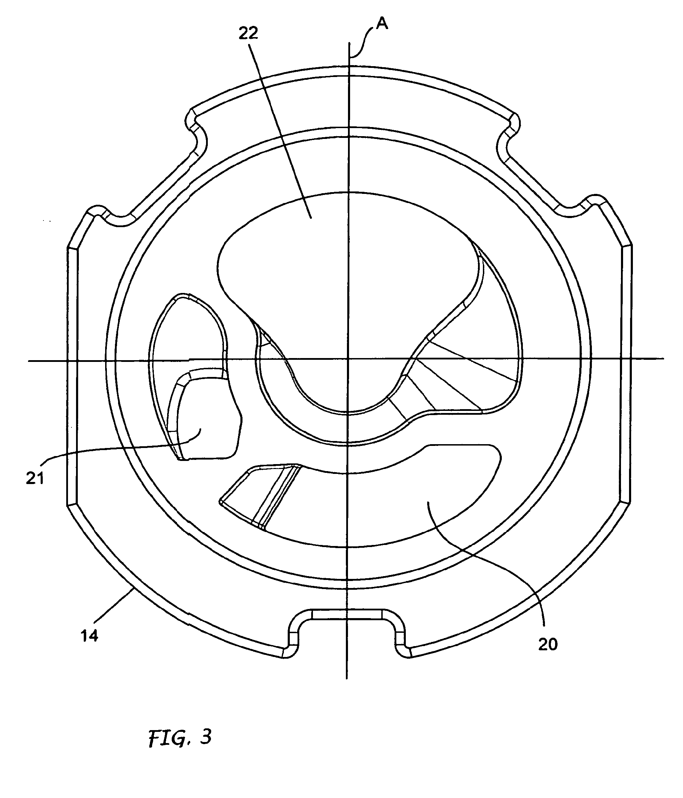

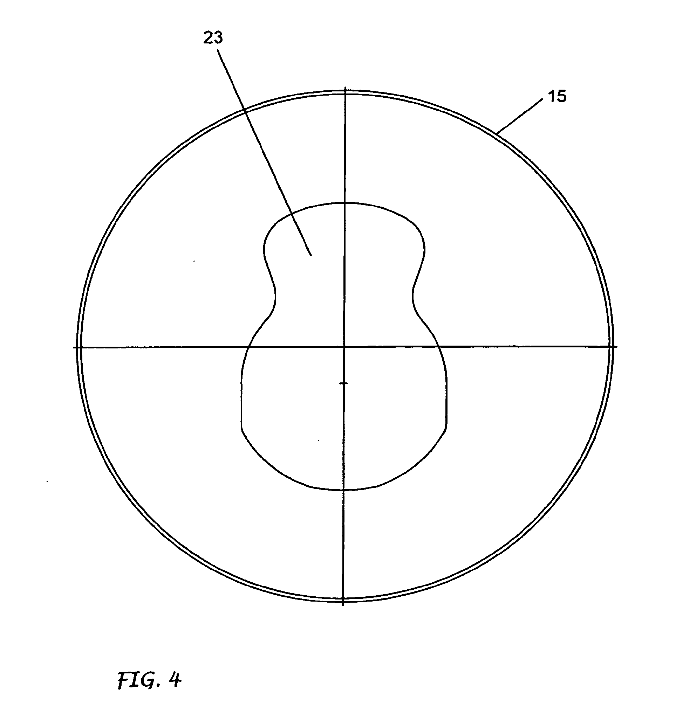

Figs. 3 and 4 show respectively the plan view of a fixed input plate and a movable control plate;
Fig. 5 shows the two fixed and movable plates overlapped with the movable plate in a centre and fully closed position of the passages for water, either cold or hot;
Fig. 6 shows a view similar to that in Fig. 5, but with the movable plate in a centre position and partially opening the passage for cold water only;
Fig. 7 still shows a view of the two overlapped plates, but with the movable plate in the fully open position for the passage of cold water only;
Fig. 8 shows the movable plate rotated over the fixed plate to a position for delivering mixed hot and cold water; and
Fig. 9 shows the movable plate rotated over the fixed plate to a position for delivering hot water only.

In said drawings a mixer valve 10 is represented according to the invention, designed to be inserted and locked, by means of interposed gaskets, in a tap body - not represented.

### Detailed Description of the Invention

The valve comprises a cartridge casing 11 having a bottom wall 12 with positioning pins 13 in the tap body.

In said casing 11 valve means are provided, comprising two overlapped plates, made of ceramic or other material, including a fixed input plate 14, resting on the bottom wall 12 with the interposition of gaskets, and a movable control plate 15, rested and movable on the fixed plated, and a control lever 16 associated with the movable plate by an interposed puller 17.

On the bottom wall 12 of the cartridge casing 11 two input passages 18, 19 are provided for supplying cold and hot water separately from respective pipes connected to the tap body.

The fixed plate 14 has two arched slots 20, 21, respectively, for cold water input and hot water input coincident with said bottom input passages 18, 19, and an output slot 22 for mixed water.

According to the invention the input slots 21, 20 for hot and cold water have different angular size, with the cold water input slot 20 larger than the other.

Moreover, the two slots are angularly arranged in an asymmetric position with respect to the diametric axis A of the fixed plate 14. In particular, the cold water input slot 20 is placed astride the axis A of the fixed plate 14 so as to be on the directrix of the control lever when the latter is in a centre closed / open position, while the hot water input slot 21 is laterally moved compared to the axis itself.

The movable plate 15 has at least one centre port 23 that, as a consequence of the plate rotation itself, is positioned far away or, selectively, partially or fully coinciding with one or both input slots 20, 21 for hot and cold water of the fixed plate and at the other side communicates with an output duct for the water passing longitudinally through the puller 17, in its turn communicating with the spout - not shown - connected to the latter.

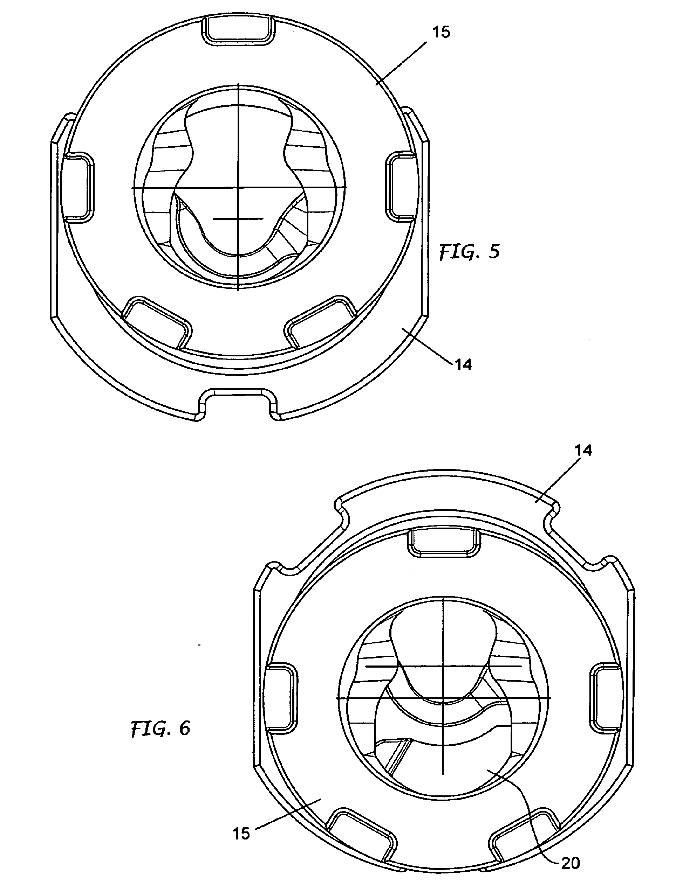

The movable plate 15 is capable of translation and rotation on the fixed plate 14 and therefore the control lever 16 is mounted and oscillating on a transversal pivot 24, to control the movements of translation of the movable plate, and is rotating around an axis 25 perpendicular to the bottom of the body, to cause the rotation of the same plate. In fact, the oscillating movement of the control lever causes a transfer movement of the movable plate 15 on fixed plate 14 between a closed position - Fig. 5 - wherein the port 23 of the fixed plate is at a distance from the slots 20, 21 of the fixed plate to an open position resulting, respectively, in the opening /closing of the mixer valve. Thanks to the particular configuration and slots position, in the open position - Fig. 6 - the port 23 intercepts at least part of the cold water input slot 20, whereas it is at a distance from the hot water input slot 21 thereby determining the cold water delivery only.

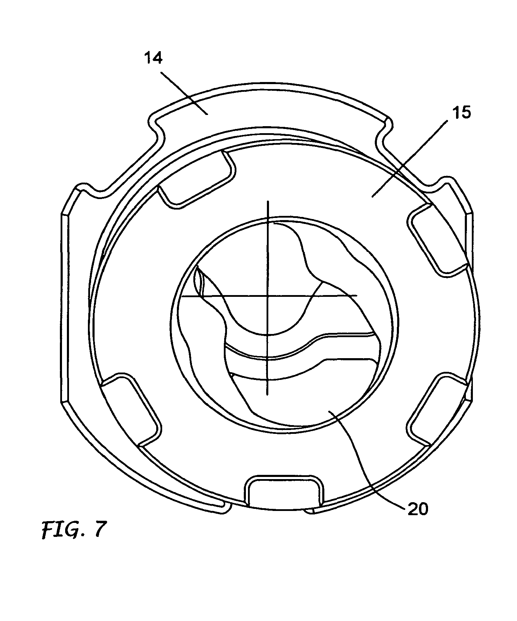

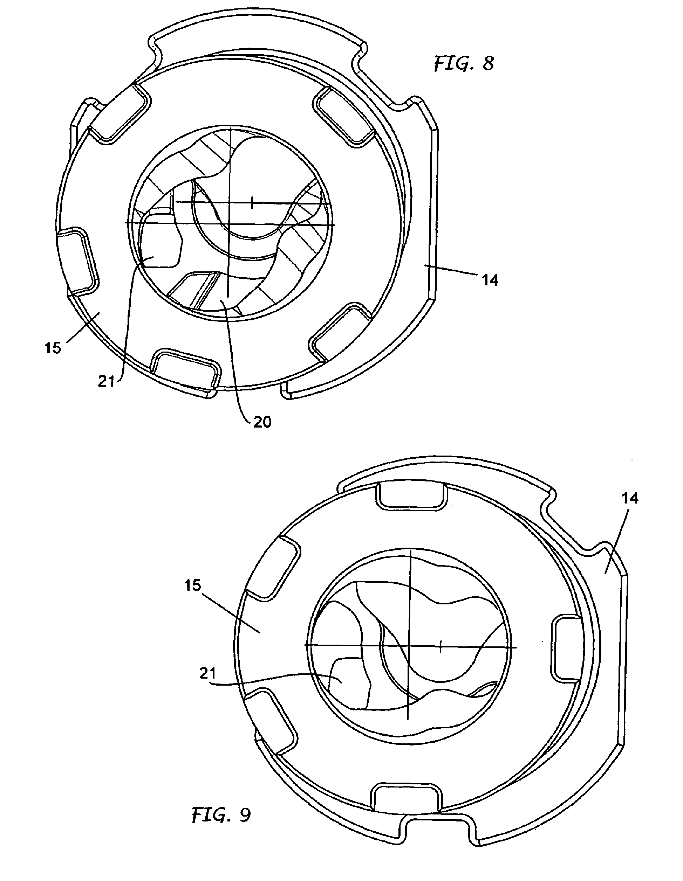

The rotation of the lever, on the contrary, allows to adjust the water temperature. More precisely, starting from the centre position, the partially or whole rotation on one side, usually the right - Fig. 7 - causes a rotation of the movable plate 15 such that the port 23 is still at the cold water input slot 20 only, with a consequent delivery of cold water; always starting from the centre position the partial rotation on the other side, usually the left - Fig. 8 - causes a rotation of the movable plate such that the port 23 is also at least partially at the hot water input slot 21 - Fig. 8 - with a delivery of mixed water, whereas the total rotation causes a rotation of the movable plate 24 such that the port 24 intercepts the hot water input slot 21 only - Fig. 9 - resulting in a hot water supply.

Thus, because of the arrangement of hot water input slot 21, the delivery of hot water can not happen accidentally when opening the tap, but only voluntarily by an user as a consequence of a rotation of the control lever compared to the open position, thus avoiding unnecessary wastage.

The real mixing angle of 90° to the left from the centre position (open valve and delivery of cold water only) meets the respective regulations in force (EN NF 817). However, an angle of rotation to the right was also set up, in the illustrated example of 30°, without changing temperature and flow rate of the delivered cold water, to give a feeling of normal use of the mixer valve (with the usual movements of the lever both to the right and to the left from centre position).

This cartridge allows to obtain savings of hot water, changing only the arrangement of the water passages in the slots /port of the plates and in the bottom wall, without the need to change other components relatively to used standard to date.

## Claims

1. A hot and cold water mixer valve (10) comprising a cartridge casing (11), a single fixed input plate (14) arranged in said cartridge casing (11), said fixed input plate (14) having an input slot for cold water (20) and an input slot for hot water (21), a moveable control plate (15) subject to transfer and rotation movements on said fixed input plate (14), said moveable control plate (15) having at least a port (23) partially or totally positionable in line with one, the other or both said input slots of the input fixed plate (14), and a control lever (16) to control said transfer and rotation movements of the moveable control plate (15) by means of a puller (17) starting from a closed/open central position of the valve, wherein with the control lever (16) in the central closed position, the port (23) of the moveable control plate (15) is radially aligned and at a distance from the cold water input slot (20) of the fixed input plate (14), and wherein with the control lever in the central opening position, the port (23) of the moveable control plate (15) is designed to intercept and communicate only with the cold water input slot (20) of the fixed input plate (14) so as to deliver only cold water, and wherein the cold water input slot (20) is positioned astride a diametric axis (A) of the fixed plate (14) basically parallel to the directrix of the control lever when the latter is in a central closed/open position.

2. A mixer valve according to claim 1, wherein the cold water input slot (20) has larger angular dimensions compared to the input slot for hot water (21).

3. A mixer valve according to claim 1 or 2, wherein the cold water input slot (20) and the hot water input slot (21) are placed at an angle in an asymmetric position compared to said diametric axis (A) of the fixed plate (14).

4. A mixer valve according to claim 3, wherein the hot water input slot (21) is completely on one side compared to said diametric axis (A).

5. A mixer valve according to any one of the previous claims, wherein, starting from the central opening position, to a partial or total rotation in an anticlockwise direction of the control lever (16), the port (23) of the moveable control plate (15) is in communication only with the cold water input slot (20), whereas following a partial or complete clockwise rotation of said control lever, the port (23) of the moveable control plate (15) is designed to partially communicate both with the cold water input slot and the hot water input slot or only fully with the hot water input slot (21), so as to deliver either mixed water or only hot water, respectively.

6. A mixer valve according to claim 5, wherein, starting from the centre position the control lever (16) is subject to an anticlockwise rotation at a lower angle compared to the rotation angle of said lever moving in a clockwise direction.

7. A mixer valve according to claim 6, wherein when starting from the centre position, the rotation angle of the control lever to deliver only cold water is about 30° and the rotation of the control lever in the opposite direction to deliver either mixed water or only hot water is about 90°.

## Patentansprüche

1. Mischventil (10) für heißes und kaltes Wasser, umfassend ein Kartuschengehäuse (11), eine einzelne, in dem gesagten Kartuschengehäuse (11) angeordnete feststehende Einlassscheibe (14), wobei die feststehende Einlassscheibe (14) einen Einlassschlitz (20) für kaltes Wasser und einen Einlassschlitz (21) für heißes Wasser aufweist, eine bewegliche Steuerscheibe (15), die mit Übertragungs- und Drehbewegungen oberhalb der gesagten feststehenden Einlassscheibe (14) beaufschlagt wird und mindestens eine, teilweise oder vollständig in Flucht mit dem einen oder mit dem anderen Einlassschlitz oder mit beiden Einlassschlitzen der feststehenden Einlassscheibe (14) ausrichtbare Öffnung (23) aufweist, sowie ein Steuerhebel (16) zum Ansteuern der gesagten Übertragungs- und Drehbewegungen der beweglichen Steuerscheibe (15) durch einen Zugelement (17), von einer geschlossenen/geöffneten Zentralstellung ausgehend, wobei, wenn sich der Steuerhebel (16) in der geschlossenen Zentralstellung befindet, die Öffnung (23) der beweglichen Steuerscheibe (15) mit dem Einlassschlitz (20) für kaltes Wasser der feststehenden Einlassscheibe (14) radial fluchtend ausgerichtet und mit Abstand von dieser angeordnet ist, und, wenn sich der Steuerhebel in der geöffneten Zentralstellung befindet, die Öffnung (23) der beweglichen Steuerscheibe (15) zum Absperren und Kommunizieren **ausschließlich** mit dem Einlassschlitz (20) der feststehenden Einlassscheibe (14) für kaltes Wasser dermaßen ausgebildet ist, so dass sie nur kaltes Wasser ausgibt, und wobei der Einlassschlitz (20) für kaltes Wasser eine zur Leitlinie des Steuerhebels im wesentlichen parallel verlaufende diametrale Achse (A) der feststehenden Scheibe (14) überspannt, wenn sich letztere in einer geschlossenen/geöffneten Zentralstellung befindet.

2. Mischventil nach Anspruch 1, wobei der Einlassschlitz (20) für kaltes Wasser größere Winkelmaße als der Einlassschlitz (21) für heißes Wasser aufweist.

3. Mischventil nach Anspruch 1 oder 2, wobei der Einlassschlitz (20) für kaltes Wasser und der Einlassschlitz (21) für heißes Wasser in einer asymmetrischen Stellung mit einem Winkel zur gesagten diametralen Achse (A) der feststehenden Scheibe (14) angeordnet sind.

4. Mischventil nach Anspruch 3, wobei der Einlassschlitz (21) für heißes Wasser vollständig auf einer Seite zur gesagten diametralen Achse (A) angeordnet ist.

5. Mischventil nach einem der vorgehenden Ansprüche, wobei, ausgehend von der geöffneten Zentralstellung in Richtung einer vollständigen oder teilweisen Drehung im Gegenuhrzeigersinn des Steuerhebels (16), die Öffnung (23) der beweglichen Steuerscheibe (15) nur mit dem Einlassschlitz (20) für kaltes Wasser kommuniziert, während einer vollständigen oder teilweisen Drehung im Uhrzeigersinn des gesagten Steuerhebels zufolge, die Öffnung (23) der beweglichen Steuerscheibe (15) zum teilweisen Kommunizieren mit beiden Schlitzen, d.h. mit dem Einlassschlitz für kaltes Wasser und mit dem Einlassschlitz für heißes Wasser, oder vollständig nur mit dem Einlassschlitz (21) für heißes Wasser ausgebildet ist, um jeweils gemischtes Wasser oder nur heißes Wasser auszugeben.

6. Mischventil nach Anspruch 5, wobei, von der Zentralstellung ausgehend, der Steuerhebel (16) mit einer Drehung im Gegenuhrzeigersinn um einen Winkel, der kleiner ist als der Drehwinkel des gesagten sich im Uhrzeigersinn bewegenden Hebels, beaufschlagt wird.

7. Mischventil nach Anspruch 6, wobei, von der Zentralstellung ausgehend, der Drehwinkel des Steuerhebels zur ausschließlichen Ausgabe von kalten Wassers etwa 30° beträgt und die Drehung des Steuerhebels in umgekehrter Richtung zur Ausgabe von gemischten Wassers oder nur heißen Wassers etwa 90° beträgt.

## Revendications

1. Une mitigeur d'eau chaude et froide (10) comprenant un boîtier (11) de cartouche, une plaque d'entrée fixe unique (14) disposé dans ledit boîtier (11) de cartouche, ladite plaque d'entrée fixe (14) ayant une fente d'entrée (20) d'eau froide et une fente d'entrée (21) pour l'eau chaude, une plaque de commande mobile (15) soumis à des mouvements de transfert et de rotation sur ladite plaque d'entrée fixe (14), ladite plaque de commande mobile (15) ayant au moins un orifice (23) partiellement ou totalement positionnable en ligne avec un, l'autre ou lesdites deux fentes d'entrée de la plaque d'entrée fixe (14), et un levier de commande (16) pour commander ledit mouvements de transfert et de rotation de la plaque de commande mobile (15) au moyen d'un extracteur (17) à partir d'une position fermée/ouverte centrale de la mitigeur, dans lequel avec le levier de commande (16) dans la position centrale fermée, l'orifice (23) de la plaque de commande mobile (15) est alignée radialement et à une distance de la fente d'entrée (20) d'eau froide de la plaque d'entrée fixe (14), et dans lequel avec le levier de commande en position d'ouverture centrale, l'orifice (23) de la plaque de commande mobile (15) est conçu pour intercepter et communiquer uniquement avec la fente d'entrée (20) d'eau froide de la plaque d'entrée fixe (14) de manière à délivrer seulement de l'eau froide, et dans lequel la fente d'entrée (20) d'eau froide est positionné à cheval sur un axe diamétral (A) de la plaque fixe (14) essentiellement parallèle à la directrice du levier de commande lorsque celui-ci est en position centrale fermée/ ouverte.

2. Mitigeur selon la revendication 1, dans lequel la fente d'entrée (20) d'eau froide présente des dimensions angulaires plus grandes par rapport à la fente d'entrée (21) pour l'eau chaude.

3. Mitigeur selon la revendication 1 ou 2, dans lequel la fente d'entrée (20) d'eau froide et la fente d'entrée (21) d'eau chaude sont placés à un angle dans une position asymétrique par rapport audit axe diamétral (A) de la plaque fixe (14).

4. Mitigeur selon la revendication 3, dans lequel la fente d'entrée (21) d'eau froide est complètement d'un côté par rapport audit axe diamétral (A).

5. Mitigeur selon une quelconque des revendications précédentes, dans lequel, à partir de la position d'ouverture centrale, à une rotation partielle ou totale dans le sens antihoraire du levier de commande (16), l'orifice (23) de la plaque de commande mobile (15) est en communication uniquement avec la fente d'entrée (20) d'eau froide, tandis que la suite d'une rotation partielle ou complète dans le sens horaire du levier de commande, l'orifice (23) de la plaque de commande mobile (15) est conçu pour communiquer à la fois partiellement avec la fente d'entrée d'eau froide et la fente d'entrée d'eau chaude ou seulement pleinement avec la fente d'entrée (21) d'eau chaude, de façon à délivrer de l'eau mélangée ou seulement de l'eau chaude, respectivement.

6. Mitigeur selon revendication 5, dans lequel, à partir de la position centrale du levier de commande (16) est soumis à une rotation dans le sens antihoraire à un angle inférieur par rapport à l'angle de rotation dudit levier déplaçant dans le sens horaire.

7. Mitigeur selon revendication 6, dans lequel à partir de la position centrale, l'angle de rotation du levier de commande pour fournir uniquement de l'eau froide est d'environ 30° et la rotation du levier de commande dans la direction opposée pour délivrer de l'eau mélangée ou seulement l'eau chaude est d'environ 90°.
